# FASCICULE DE BREVET EUROPEEN

(11) **EP 2 812 177 B1**
(45) Date de publication et mention de la délivrance du brevet: **06.04.2016**
(21) Numéro de dépôt: 13701653.1
(22) Date de dépôt: 31.01.2013
(51) Int. Cl.: B29D 30/38, D02G 3/48, D07B 1/06, B60C 9/00, B29B 15/12

(54) **RENFORT COMPOSITE GAINE D'UNE COUCHE DE POLYMERE AUTO-ADHERENTE AU CAOUTCHOUC ET PROCÉDÉ DE FABRICATION ASSOCIÉ**
VERBUNDVERSTÄRKUNG MIT UMMANTELTER SELBSTKLEBENDER KAUTSCHUKPOLYMERSCHICHT UND ENTSPRECHENDES HERSTELLUNGSVERFAHREN
COMPOSITE REINFORCEMENT SHEATHED WITH A RUBBER SELF-ADHESIVE POLYMER LAYER AND CORRESPONDING MANUFACTURING METHOD

(30) Priorité: 08.02.2012 FR 1251156
(43) Date de publication de la demande: 17.12.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Vincent, F-63040 Clermont-Ferrand Cedex 9 (FR); RIGO, Sébastien, F-63040 Clermont-Ferrand Cedex 9 (FR); CUSTODERO, Emmanuel, F-63040 Clermont-Ferrand Cedex 9 (FR)
(74) Mandataire: Desbordes, Guillaume
(86) Numéro de dépôt international: PCT/EP2013/051842
(87) Numéro de publication internationale: WO 2013/117474

(56) Documents cités:
- EP-A1- 1 371 680
- WO-A1-2011/012521
- WO-A2-2007/137378
- FR-A1- 2 952 076

## Description

### DOMAINE DE L'INVENTION

Le domaine de la présente invention est celui des éléments de renforcement ou « renforts », notamment métalliques, utilisables pour renforcer des articles finis ou produits semi-finis en caoutchouc diène tels que par exemple des pneumatiques.

La présente invention est plus particulièrement relative à des renforts de type hybride ou composite constitués d'au moins une âme, en particulier métallique, ladite âme étant recouverte ou gainée d'une couche ou gaine de matière polymère.

### ETAT DE LA TECHNIQUE

Le gainage de renforts métalliques par des matières polymère, particulièrement des matières thermoplastiques tels que par exemple polyamide ou polyester est connu depuis fort longtemps, notamment afin de protéger ces renforts contre diverses agressions externes tels qu'oxydation ou abrasion, ou encore en vue de rigidifier structurellement, solidariser entre eux divers ensembles de fils ou assemblages de fils tels que des câbles, et ainsi augmenter notamment leur résistance au flambage.

De tels renforts composites, ainsi que leur utilisation dans des articles en caoutchouc tels que des pneumatiques, ont été décrits dans de nombreux documents brevet.

La demande de brevet EP 0 962 562 a décrit par exemple un renfort en acier ou en textile aramide gainé par une matière thermoplastique telle que polyester ou polyamide, en vue d'améliorer sa résistance à l'abrasion.

La demande de brevet FR 2 601 293 a décrit le gainage d'un câble métallique avec du polyamide pour l'utiliser comme tringle dans un bourrelet de bandage pneumatique, ce gainage permettant avantageusement d'adapter la forme de cette tringle à la structure et aux conditions de fonctionnement du bourrelet du bandage pneumatique qu'elle renforce.

Les documents brevet FR 2 576 247 ou US 4 754 794 ont également décrit des fils ou câbles métalliques utilisables comme tringle dans un bourrelet de bandage pneumatique, ces fils ou câbles étant doublement voire triplement gainés par deux, respectivement trois matières thermoplastiques différentes (e.g. polyamides) ayant des températures de fusion différentes, en vue d'une part de contrôler la distance entre ces fils ou câbles, d'autre part de supprimer les risques d'usure par frottement ou de corrosion, pour les utiliser comme tringle dans un bourrelet de bandage pneumatique.

Ces renforts ainsi gainés de matière polyester ou polyamide présentent, outre les avantages précités de résistance à la corrosion, de résistance à l'abrasion et de rigidité structurelle, celui non négligeable de pouvoir être ensuite collés à des matrices de caoutchouc diénique en utilisant de simples colles textiles dites "RFL" (résorcinol-formaldéhyde-latex) comportant au moins un élastomère diénique tel que du caoutchouc naturel, colles qui de manière connue confèrent une adhésion satisfaisante entre des fibres textiles tels que fibres en polyester ou polyamide et un caoutchouc diénique.

Ainsi, peuvent être utilisés avantageusement des renforts métalliques non revêtus de couches métalliques adhésives tels que laiton, ainsi que des matrices de caoutchouc environnantes dépourvues de sels métalliques tels que sels de cobalt, nécessaires de manière connue au maintien des performances adhésives au cours du temps mais augmentant significativement d'une part le coût des matrices de caoutchouc elles-mêmes, d'autre part leur sensibilité à l'oxydation et au vieillissement (voir par exemple demande de brevet WO 2005/113666).

Toutefois, les colles RFL ci-dessus ne sont pas dépourvues d'inconvénient ; elles comportent en particulier comme substance de base le formaldéhyde (ou formol) ainsi que le résorcinol qu'il est souhaitable de supprimer à terme des compositions adhésives, en raison de l'évolution récente de la réglementation européenne sur ce type de produits.

Ainsi, les concepteurs d'articles en caoutchouc diénique, notamment les manufacturiers de pneumatiques sont à la recherche aujourd'hui de nouveaux systèmes adhésifs ou de nouveaux renforts qui permettent de pallier tout ou partie des inconvénients précités.

Les demandes WO 2010/105975, WO 2010/136389, WO 2011/012521 et WO 2011/051204 récemment publiées, divulguent des renforts composites, notamment à âme métallique, du type auto-adhérents qui répondent à l'objectif ci-dessus, ces renforts présentant des niveaux d'adhésion au caoutchouc qui concurrencent largement ceux atteints avec les colles RFL traditionnelles.

Ils ont toutefois comme inconvénient que leur procédé de fabrication passe par deux étapes successives de gainage ou recouvrement, nécessitant tout d'abord le dépôt d'une première couche de polymère thermoplastique tel que polyamide, ensuite le dépôt d'une deuxième couche d'élastomère thermoplastique insaturé, les deux dépôts, conduits à des températures différentes, étant en outre séparés par une étape intermédiaire de refroidissement à l'eau (pour solidification de la première couche) puis séchage.

Ces manipulations successives sont quelque peu pénalisantes du point de vue industriel, et antinomiques de la recherche de cadences de fabrication élevée.

D'autres documents, par exemple WO2007/137378, décrivent des renforts dans lesquels des fibres naturelles sont noyées dans une matrice polymérique de polyamide.

### BREVE DESCRIPTION DE L'INVENTION

Poursuivant leurs recherches, les Demanderesses ont découvert un renfort composite nouveau du type auto-adhérent, qui permet lui aussi d'atteindre d'excellents niveaux d'adhésion comparativement à l'emploi de colles RFL, tout en offrant un procédé de fabrication simplifié, comparativement aux procédés décrits dans les demandes précitées, puisqu'il ne nécessite qu'une seule opération de gainage.

En conséquence, un premier objet de l'invention concerne un renfort composite comportant :
- un ou plusieurs fil(s) de renforcement ;
- une couche d'une composition polymère qui recouvre ledit fil, individuellement chaque fil ou collectivement plusieurs fils, cette composition comportant au moins un polymère thermoplastique dont la température de transition vitreuse est positive et un élastomère diénique époxydé.

On a constaté de manière inattendue que l'utilisation de cette composition polymère spécifique, en monocouche, permettait d'assurer une adhésion directe et performante du renfort composite de l'invention à une matrice ou composition d'élastomère diénique telle que celles couramment utilisées dans des pneumatiques.

L'invention concerne également un procédé de fabrication du renfort composite ci-dessus, ledit procédé comportant au moins une étape dans laquelle on recouvre individuellement le fil ou chaque fil de renforcement, ou collectivement plusieurs fils de renforcement, par la couche de la composition polymère précitée.

La présente invention concerne également l'utilisation du renfort composite de l'invention comme élément de renforcement d'articles finis ou de produits semi-finis en caoutchouc, particulièrement de pneumatiques, notamment ceux destinés à équiper des véhicules à moteur de type tourisme, véhicules utilitaires sport (« SUV »), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout article fini ou produit semi-fini en caoutchouc, en particulier pneumatique, comportant un renfort composite selon l'invention.

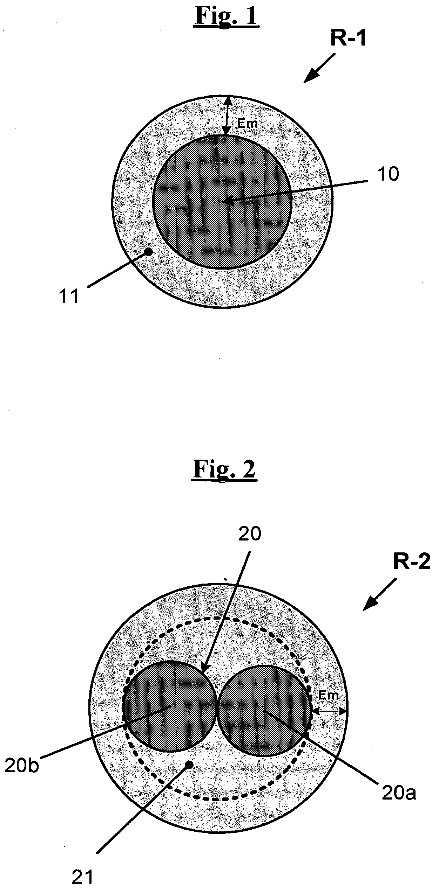

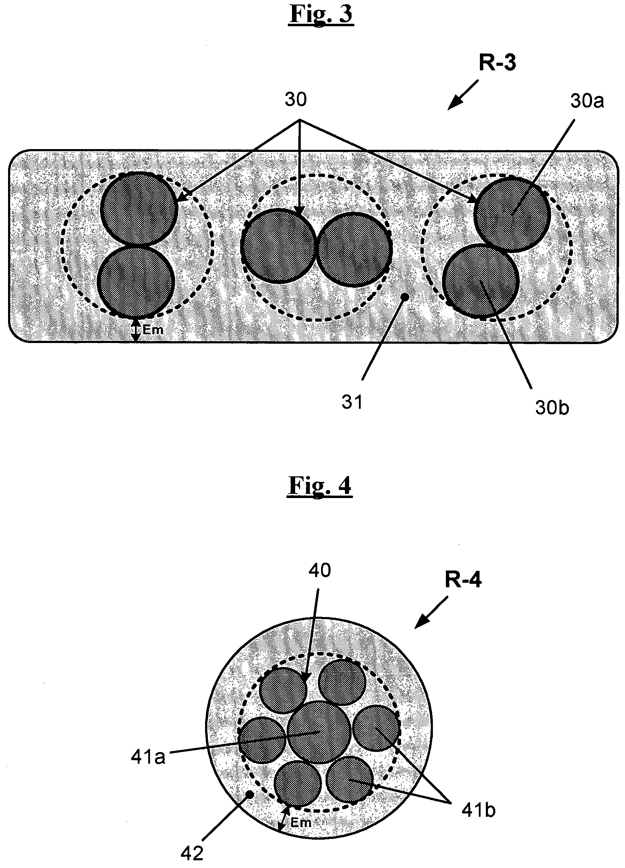

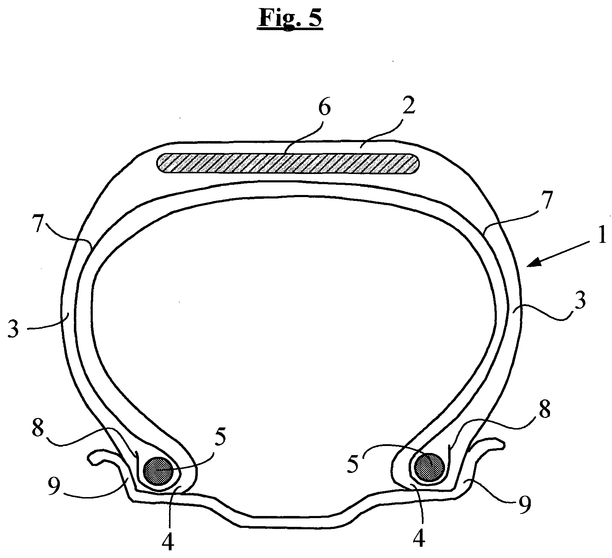

L'invention ainsi que ses avantages seront aisément compris à la lumière de la description et des exemples de réalisation qui suivent, ainsi que des figures relatives à ces exemples qui schématisent :
- en coupe transversale, un exemple d'un renfort composite selon l'invention (Fig. 1) ;
- en coupe transversale, un autre exemple d'un renfort conforme à l'invention (Fig. 2) ;
- en coupe transversale, un autre exemple d'un renfort conforme à l'invention (Fig. 3) ;
- en coupe transversale, un autre exemple d'un renfort conforme à l'invention (Fig. 4) ;
- en coupe radiale, un pneumatique à armature de carcasse radiale conforme à l'invention, incorporant un renfort composite selon l'invention (Fig. 5).

### DESCRIPTION DETAILLEE DE L'INVENTION

Dans la présente description, sauf indication expresse différente, tous les pourcentages (%) indiqués sont des pourcentages en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le renfort composite de l'invention, susceptible d'adhérer directement par cuisson à une composition de caoutchouc insaturé, et utilisable notamment pour le renforcement d'articles en caoutchouc diène tels que des pneumatiques, a donc comme caractéristiques essentielles de comporter :
- au moins un fil (c'est-à-dire un ou plusieurs fils) de renforcement ;
- recouvrant ledit fil, individuellement chaque fil ou collectivement plusieurs fils, une couche d'une composition polymère, cette composition comportant au moins un polymère thermoplastique dont la température de transition vitreuse (notée ci-après Tg₁) est positive (c'est-à-dire supérieure à 0°C) et un élastomère diénique époxydé.

En d'autres termes, le renfort composite de l'invention comporte un seul fil ou plusieurs fils de renforcement, ledit fil, individuellement chaque fil ou collectivement plusieurs fils étant recouvert(s) par une couche (monocouche) ou gaine de la composition polymère énoncée ci-dessus. La structure du renfort de l'invention est décrite en détail ci-après.

Dans la présente demande, on entend de manière générale par fil de renforcement (*"reinforcing thread"*) tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé.

Ce fil de renforcement peut prendre tout forme connue, il peut d'agir par exemple d'un mono filament élémentaire de diamètre important (par exemple et de préférence égal ou supérieur à 50 µm), d'un ruban élémentaire, d'une fibre multifilamentaire (constituée d'une pluralité de filaments élémentaires de faible diamètre, typiquement inférieur à 30 µm), d'un retors textile formé de plusieurs fibres retordues ensemble, d'un câble textile ou métallique formé de plusieurs fibres ou monofilaments câblés ou retordus ensemble, ou encore d'un assemblage, un groupe, une rangée de fils tels que par exemple une bande ou bandelette comportant plusieurs de ces monofilaments, fibres, retors ou câbles regroupés ensemble, par exemple alignés selon une direction principale, rectiligne ou pas.

Le fil ou chaque fil de renforcement a un diamètre qui est préférentiellement inférieur à 5 mm, notamment compris dans un domaine de 0,1 à 2 mm.

De préférence, le fil de renforcement est un fil de renforcement métallique, notamment en acier au carbone tel que ceux utilisés dans les câbles type "*steel cords"* pour pneumatiques ; mais il est bien entendu possible d'utiliser d'autres aciers, par exemple des aciers inoxydables. Lorsqu'un acier au carbone est utilisé, sa teneur en carbone est de préférence comprise entre 0,4% et 1,2%, notamment entre 0,5% et 1,1%. L'invention s'applique en particulier à tout acier du type *steel cord* à résistance standard (dit "NT" pour *"Normal Tensile"*), à haute résistance (dit "HT" pour *"High Tensile"*), à très haute résistance (dit "SHT" pour *"Super High Tensile"*) comme à ultra-haute résistance (dit "UHT" pour *"Ultra High Tensile"*).

L'acier pourrait être revêtu d'une couche adhésive telle que du laiton ou du zinc. Toutefois, on peut avantageusement utiliser un acier clair, c'est-à-dire non revêtu. En outre, grâce à l'invention, la composition de caoutchouc destinée à être renforcée par un renfort métallique selon l'invention ne nécessite plus l'emploi dans sa formulation de sels métalliques tels que des sels de cobalt.

La composition de polymère constituant la couche ou gaine ci-dessus comporte tout d'abord un polymère thermoplastique dont la Tg (Tg₁) est par définition positive (notamment comprise entre 0°C et 200°C), de préférence supérieure à +20°C (notamment comprise entre 20°C et 150°C), plus préférentiellement supérieure à +30°C (notamment comprise entre 30°C et 150°C). D'autre part, la température de fusion (notée Tf) de ce polymère thermoplastique est de préférence supérieure à 100°C, plus préférentiellement supérieure à 150°C, notamment supérieure à 200°C.

Ce polymère thermoplastique est choisi préférentiellement dans le groupe constitué par les polyamides, les polyesters et les polyimides, plus particulièrement dans le groupe constitué par les polyamides aliphatiques et les polyesters. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides aliphatiques, on peut citer notamment les polyamides 4-6, 6, 6-6, 11 ou 12. Ce polymère thermoplastique est préférentiellement un polyamide aliphatique, plus préférentiellement un polyamide 6 ou un polyamide 11.

Le deuxième constituant essentiel de la composition de polymère est un élastomère diénique porteur de groupes ou fonctions époxyde, c'est-à-dire que l'élastomère diénique est un élastomère diénique époxydé.

Par élastomère ou caoutchouc (les deux termes étant de manière connue synonymes et interchangeables) du type "diénique", on rappelle que doit être entendu un élastomère qui est issu au moins en partie (i.e. un homopolymère ou un copolymère) de monomères diènes (monomères porteurs de deux doubles liaisons carbone-carbone, conjuguées ou non).

Ces élastomères diéniques, dans la présente demande par définition non thermoplastiques, présentant une Tg dans la très grande majorité des cas qui est négative (c'est-à-dire inférieure à 0°C), peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

La Tg des polymères thermoplastiques et des élastomères diéniques décrits ci-dessus est mesurée de manière connue par DSC (*Differential Scanning Calorimetry*), par exemple et sauf indications différentes spécifiées dans la présente demande, selon la norme ASTM D3418 de 1999.

Une deuxième caractéristique essentielle de l'élastomère diénique utilisé dans le renfort composite de l'invention est qu'il est fonctionnalisé époxyde.

De tels élastomères diéniques fonctionnalisés et leurs procédés d'obtention sont bien connus de l'homme du métier et disponibles commercialement. Des élastomères diéniques porteurs de groupes époxyde ont été décrits par exemple dans US 2003/120007 ou EP 0763564, US 6903165 ou EP 1403287.

Préférentiellement, l'élastomère diénique époxydé est choisi dans le groupe constitué par les caoutchoucs naturels (NR) époxydés, les polyisoprènes (IR) de synthèse époxydés, les polybutadiènes (BR) époxydés ayant préférentiellement un taux de liaisons cis-1,4 supérieur à 90%, les copolymères de butadiène-styrène (SBR) époxydés et les mélanges de ces élastomères.

Les caoutchoucs naturels époxydés (en abrégé "ENR"), par exemple, peuvent être obtenus de manière connue par époxydation du caoutchouc naturel, par exemple par des procédés à base de chlorohydrine ou de bromohydrine ou des procédés à base de peroxydes d'hydrogène, d'alkyl hydroperoxydes ou de peracides (tel que acide peracétique ou acide performique) ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Sartomer sous la dénomination "Poly Bd" (par exemple "Poly Bd 605E"). Les SBR époxydés peuvent être préparés par des techniques d'époxydation bien connues de l'homme du métier.

Le taux (% molaire) d'époxydation, des élastomères diéniques époxydés précédemment décrits peut varier dans une large part selon les modes de réalisation particuliers de l'invention, de préférence dans un domaine de 5% à 60%. Quand le taux d'époxydation est inférieur à 5%, l'effet technique visé risque d'être insuffisant tandis qu'au-delà de 60%, la masse moléculaire du polymère diminue fortement. Pour toutes ces raisons, le taux d'époxydation, est plus préférentiellement compris dans un domaine de 10% à 50%.

Les élastomères diéniques époxydés précédemment décrits sont de manière connue solides à température ambiante (20°C) ; on entend par solide toute substance n'ayant pas la capacité de prendre à terme, au plus tard au bout de 24 heures, sous le seul effet de la gravité et à température ambiante (20°C), la forme du récipient qui la contient.

Par opposition notamment à des élastomères du type liquides, ces élastomères solides se caractérisent par une viscosité très élevée : leur viscosité Mooney à l'état cru (i.e., non réticulé), notée ML (1+4), mesurée à 100°C, est de préférence supérieure à 20, plus préférentiellement supérieure à 30, en particulier comprise entre 30 et 130. On utilise pour cette mesure un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (par exemple 100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML 1+4) est exprimée en "unité Mooney" (UM, avec 1 UM=0,83 Newton.mètre).

Bien que les deux constituants décrits ci-dessus (polymère thermoplastique et élastomère diénique époxydé) soient suffisants à eux seuls pour conférer au renfort composite de l'invention de très hautes propriétés d'adhésion à un caoutchouc insaturé tel que du caoutchouc naturel, certains additifs conventionnels tels que colorant, charge, plastifiant, tackifiant, antioxydant ou autre stabilisant, système de réticulation ou vulcanisation tel que soufre et accélérateur, pourraient être éventuellement ajoutés à la composition polymère précédemment décrite.

La figure 1 annexée représente de manière très schématique (sans respect d'une échelle spécifique), en coupe transversale, un premier exemple d'un renfort composite conforme à l'invention. Ce renfort composite noté R-1 est constitué d'un fil de renforcement (10) constitué d'un filament unitaire ou monofilament de diamètre relativement élevé (par exemple entre 0,10 et 0,50 mm), par exemple en acier au carbone, qui est recouvert d'une couche (11) comportant un polymère thermoplastique dont la Tg est positive, par exemple en polyamide ou en polyester, et un élastomère diénique, par exemple un BR, SBR ou NR, du type époxydé ; l'épaisseur minimale de cette couche est notée Eₘ sur cette figure 1.

La figure 2 schématise en coupe transversale un deuxième exemple d'un renfort composite conforme à l'invention. Ce renfort composite noté R-2 est constitué d'un fil de renforcement (20) constitué en fait de deux filaments unitaires ou monofilaments (20a, 20b) de diamètre relativement élevé (par exemple entre 0,10 et 0,50 mm) retordus ou câblés ensemble, par exemple en acier au carbone ; le fil de renforcement (20) est recouvert d'une couche (21) d'épaisseur minimale Eₘ, comportant un polymère thermoplastique dont la Tg (Tg₁) est positive, par exemple en polyamide ou en polyester, et un élastomère diénique époxydé, par exemple du type SBR, BR ou NR.

La figure 3 schématise en coupe transversale un autre exemple de renfort composite selon l'invention. Ce renfort composite noté R-3 est constitué de trois fils de renforcement (30) constitués chacun de deux monofilaments (30a, 30b) de diamètre relativement élevé (par exemple entre 0,10 et 0,50 mm) retordus ou câblés ensemble, par exemple en acier au carbone ; l'ensemble constitué par les trois fils de renforcement (30) par exemple alignés est recouvert d'une couche (31) comportant un polymère thermoplastique dont la Tg (Tg₁) est positive, par exemple en polyamide ou en polyester, et un élastomère diénique époxydé, par exemple du type BR, SBR ou NR.

La figure 4 schématise, toujours en coupe transversale, un autre exemple de renfort composite selon l'invention. Ce renfort composite R-4 comporte un fil de renforcement (40) consistant en un câble d'acier de construction 1+6, avec un fil central ou fil d'âme (41a) et six filaments (41b) de même diamètre enroulés ensemble en hélice autour du fil central. Ce câble ou fil de renforcement (40) est recouvert d'une couche (42) d'une composition de polymère comportant un polyamide et un élastomère diénique, par exemple un BR, SBR ou NR, époxydé.

Dans les renforts composites conformes à l'invention tels que ceux schématisés par exemple dans les figures 1 à 4 ci-dessus, l'épaisseur minimale Eₘ de la gaine entourant le fil ou les fils de renforcement peut varier dans une très large mesure en fonction des conditions particulières de réalisation de l'invention. Elle est de préférence comprise entre 1 µm et 2 mm, plus préférentiellement entre 10 µm et 1 mm.

Dans le cas où plusieurs fils de renforcement (notamment plusieurs câbles) sont utilisés, la couche ou gaine d'enrobage peut être déposée individuellement sur chacun des fils de renforcement (notamment sur chacun des câbles) (pour rappel, que ces fils de renforcement soit unitaires ou pas), comme illustré par exemple aux figures 1, 2 et 4 commentées précédemment, ou bien déposée collectivement sur plusieurs des fils de renforcement (notamment sur plusieurs des câbles) disposés de manière appropriée, par exemple alignés selon une direction principale, comme illustré par exemple à la figure 3.

Le renfort composite de l'invention est susceptible d'être préparé selon un procédé spécifique comportant au moins comme étape essentielle celle de recouvrir individuellement le fil ou chaque fil de renforcement, ou collectivement plusieurs fils de renforcement, par une couche de la composition polymère comportant au moins le polymère thermoplastique dont la température de transition vitreuse est positive, et l'élastomère diénique époxydé.

Cette étape peut être conduite de manière connue de l'homme du métier, elle consiste par exemple à faire passer le fil de renforcement, à travers une filière de diamètre adapté, dans une tête d'extrusion chauffée à une température appropriée.

Selon un mode de réalisation préférentiel, le ou les fils de renforcement sont préchauffés, par exemple par induction ou par rayonnement IR, avant passage dans la tête d'extrusion. En sortie de la tête d'extrusion, le ou les fils de renforcement ainsi gainés sont ensuite refroidis suffisamment de manière à solidifier la couche de polymère, par exemple avec de l'air ou un autre gaz froid, ou par passage dans un bain d'eau suivi d'une étape de séchage.

Le renfort composite conforme à l'invention ainsi obtenu peut subir optionnellement un traitement thermo-oxydant, directement en sortie d'extrusion ou ultérieurement après refroidissement.

A titre d'exemple, pour l'obtention d'un fil de renforcement gainé ayant un diamètre total d'environ 1 mm, le recouvrement d'un fil de renforcement de diamètre proche de 0,6 mm, par exemple d'un câble métallique constitué simplement de deux monofils élémentaires de diamètre 0,3 mm torsadés ensemble (comme illustré par exemple à la figure 2), par une couche d'une composition de polyamide et de SBR époxydé, d'épaisseur maximale égale à environ 0,4 mm, est réalisé sur une ligne d'extrusion-gainage comportant deux filières, une première filière (contre-filière ou filière amont) de diamètre égal à environ 0,65 mm et une seconde filière (ou filière aval) de diamètre égal à environ 0,95 mm, disposées toutes deux dans une tête d'extrusion chauffée à environ 240°C. Le mélange de polyamide et SBR époxydé, porté à une température de 240°C dans l'extrudeuse, recouvre ainsi le câble, par le biais de la tête de gainage, à une vitesse de défilement du fil typiquement égale à plusieurs dizaines de m/min, pour un débit de pompe d'extrusion typiquement de plusieurs dizaines de g/min. Le mélange de polyamide et SBR époxydé peut être réalisé in situ, dans la même tête d'extrusion, les deux composants étant alors apportés par exemple par deux trémies d'alimentation différentes ; selon un autre exemple de réalisation possible, polyamide et SBR époxydé peuvent être également utilisés sous forme d'un mélange préalablement fabriqué, par exemple sous forme de granules, une seule trémie d'alimentation étant alors suffisante. En sortie de ce gainage, le câble peut être immergé dans un bac rempli d'eau froide, pour refroidissement avant passage de la bobine de réception à l'étuve pour séchage.

A l'issue de cette opération de gainage, par exemple directement en sortie de la tête de gainage, le renfort composite peut, selon un mode de réalisation préférentiel de l'invention, subir un traitement thermique sous air (ou traitement thermo-oxydant), en traversant par exemple un four-tunnel, par exemple de plusieurs mètres de long, pour y subir un traitement thermique sous air (traitement thermo-oxydant). Cette température de traitement est par exemple comprise entre 150°C et 300°C, pour des durées de traitement de quelques secondes à quelques minutes selon les cas (par exemple entre 10 s et 10 min), étant entendu que la durée du traitement sera d'autant plus courte que la température sera élevée, et que le traitement thermique ne doit évidemment pas conduire à une refusion ou même un ramollissement excessif des matières thermoplastiques utilisées.

Ainsi terminé, le renfort composite de l'invention est avantageusement refroidi, par exemple à l'air, pour éviter des problèmes de collage parasite lors de son enroulement sur la bobine de réception finale.

L'homme du métier saura ajuster, le cas échéant, la température et la durée du traitement thermique optionnel ci-dessus, en fonction des conditions particulières de mise en oeuvre de l'invention, notamment de la nature exacte du renfort composite fabriqué, en particulier selon que l'on traite des mono filaments pris individuellement, des câbles constitués de plusieurs monofilaments ou des groupes de tels monofilaments ou câbles tels que des bandelettes. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Les étapes du procédé de l'invention précédemment décrites pourraient être complétées par un traitement final de réticulation tridimensionnelle du renfort, pour renforcer encore la propre cohésion de sa gaine, notamment dans les cas où ce renfort composite est destiné à une utilisation ultérieure à une température relativement élevée, typiquement supérieure à 100°C.

Cette réticulation pourra être conduite par tout moyen connu, par exemple par des moyens de réticulation physiques tels que bombardement ionique ou électronique, ou par des moyens de réticulation chimiques, par exemple en introduisant un agent réticulant dans la composition de polymère, par exemple au cours de son extrusion, ou encore en introduisant dans cette composition un système de vulcanisation (c'est-à-dire un système de réticulation à base de soufre).

Une réticulation pourra être également obtenue lors de la cuisson des pneumatiques (ou plus généralement des articles en caoutchouc) que le renfort composite de l'invention est destiné à renforcer, grâce au propre système de réticulation présent dans les compositions de caoutchouc diénique constitutives de tels pneumatiques (ou articles en caoutchouc) et entrant au contact du renfort composite de l'invention.

Le renfort composite de l'invention est utilisable directement, c'est-à-dire sans nécessiter un quelconque système adhésif supplémentaire, comme élément de renforcement d'une matrice de caoutchouc diène, par exemple dans un pneumatique. Il est avantageusement utilisable pour le renforcement de pneumatiques de tous types de véhicules, en particulier véhicules tourisme ou véhicules industriels tels que Poids-lourd.

A titre d'exemple, la figure 5 annexée représente de manière très schématique (sans respect d'une échelle spécifique), une coupe radiale d'un pneumatique conforme à l'invention pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique essentielle qu'au moins une de ses armatures de sommet ou de carcasse comporte un renfort composite selon l'invention. Selon un autre exemple de mode de réalisation possible de l'invention, ce sont par exemple les tringles 5 qui pourraient être constituées d'un renfort composite selon l'invention.

### EXEMPLES DE REALISATION DE L'INVENTION

### Essai 1 - Fabrication des renforts composites

On fabrique tout d'abord des renforts composites conformes à l'invention, de la manière suivante. Le fil de renforcement de départ est un câble d'acier (dit *"steel cord"*) pour bandages pneumatiques (acier standard à 0,7% en poids de carbone), de construction 1x2 constitué de deux fils élémentaires ou monofils de diamètre 0,30 mm retordus ensemble selon un pas d'hélice de 10 mm. Son diamètre est de 0,6 mm.

Le recouvrement de ce câble par un mélange de polyamide 6 (« Ultramid B33 » de la société BASF ; Tf égale à environ 230°C) et d'un SBR époxydé (taux d'époxydation égal à 11% (mol) ; Tg -40°C ; 28% de styrène, 55% de liaisons 1,4 et 17% de liaisons 1,2), est réalisé sur une ligne d'extrusion-gainage par passage à travers une tête d'extrusion chauffée à 240°C et comportant deux filières, une filière amont de diamètre 0,63 mm et une filière aval de diamètre 0,92 mm. Le mélange polymère constitué du polyamide 6 (débit de pompe d'environ 63 g/min) et du SBR époxydé (débit de pompe d'environ 14 g/min) (selon des rapports pondéraux polyamide/ SBR de 82/ 18), est porté à une température de 240°C et recouvre ainsi le fil (préchauffé à environ 174°C par passage à travers un générateur HF) défilant à une vitesse de 60 m/min. En sortie de la tête de gainage, le renfort composite obtenu est immergé en continu dans un bac de refroidissement rempli d'eau à 5°C pour refroidir sa gaine, puis séché par une buse d'air.

La température de transition vitreuse, Tg₁, du polyamide utilisé ci-dessus est égale à environ + 45°C (par exemple mesurée selon le mode opératoire qui suit : appareil DSC "822-2" de Mettler Toledo ; atmosphère Hélium ; échantillons préalablement portés de la température ambiante (20°C) à 100°C (20°C/min), puis refroidis rapidement jusqu'à -140°C, avant enregistrement final de la courbe de DSC de -140°C à +300°C à 20°C/min).

A l'issue de ce gainage, dans ces exemples, on soumet l'ensemble à un traitement thermique d'une durée d'environ 100 s, par passage à 3 m/min dans un four-tunnel, sous atmosphère ambiante (air), porté à une température de 270°C. On obtient ainsi des renforts composites conformes à l'invention (Renforts R-2 tels que schématisés à la figure 2), constitués du câble d'acier de départ gainé de sa couche de composition polymère (polyamide et élastomère époxydé) dont les propriétés d'adhésion sont optimales.

Dans l'essai ci-dessus, pour déterminer les meilleures conditions opératoires du traitement thermique, on a réalisé préalablement un balayage en température de 160°C à 280°C, pour quatre durées de traitement (50 s, 100 s, 200 s et 400 s).

### Essai 2 - Tests d'adhésion

La qualité de la liaison entre le caoutchouc et les renforts composites précédemment fabriqués est ensuite appréciée par un test dans lequel on mesure la force nécessaire pour extraire les renforts d'une composition de caoutchouc vulcanisée (« vulcanisat »). Cette composition de caoutchouc est une composition conventionnelle utilisée pour le calandrage de nappes métalliques de ceinture de pneumatique, à base de caoutchouc naturel, de noir de carbone et des additifs usuels.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les renforts composites (15 brins au total) sont emprisonnés entre les deux plaques de caoutchouc à l'état cru, à égale distance et en laissant dépasser de part et d'autre de ces plaques une extrémité de renfort composite de longueur suffisante pour la traction ultérieure. Le bloc comportant les renforts est alors placé dans un moule adapté puis cuit (réticulé) sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque renfort isolément hors du caoutchouc, à une vitesse et une température données (par exemple, dans le cas présent, à 50 mm/min et 25°C). On caractérise les niveaux d'adhésion en mesurant la force dite d'arrachage (notée Fₘₐₓ) pour arracher les renforts de l'éprouvette (moyenne sur 15 tractions).

On a constaté que le renfort composite de l'invention, malgré le fait qu'il soit dépourvu de colle RFL (ou toute autre colle), présentait une force d'arrachage Fₘₐₓ particulièrement élevée et inattendue, puisque augmentée d'environ 65% par rapport à la force d'arrachage de référence mesurée sur un renfort composite témoin gainé simplement de polyamide 6 et encollé avec une colle conventionnelle RFL.

Dans les mêmes conditions, un renfort composite témoin gainé simplement de polyamide 6 (donc sans SBR époxydé), mais dépourvu de colle RFL (ou toute autre colle), présentait une adhésion nulle au caoutchouc (force d'arrachage égale pratiquement à zéro).

En conclusion, le renfort composite de l'invention par son caractère auto-adhérent constitue une alternative particulièrement intéressante, compte tenu des très hauts niveaux d'adhésion obtenus, aux renforts composites de l'art antérieur gainés par une matière thermoplastique telle que polyamide ou polyester, nécessitant de manière connue l'emploi d'une colle du type RFL pour assurer leur adhésion ultérieure au caoutchouc.

## Revendications

1. Renfort composite (R-1; R-2; R-3; R-4) comportant :
- un ou plusieurs fil(s) (10; 20; 30; 40) de renforcement ;
- une couche (11; 21; 31; 42) d'une composition polymère qui recouvre ledit fil, individuellement chaque fil ou collectivement plusieurs fils, cette composition comportant au moins un polymère thermoplastique dont la température de transition vitreuse est positive et un élastomère diénique époxydé.

2. Renfort (R-1; R-2; R-3; R-4) selon la revendication 1, dans lequel la température de transition vitreuse du polymère thermoplastique est supérieure à +20°C.

3. Renfort (R-1; R-2; R-3; R-4) selon les revendications 1 ou 2, dans lequel le polymère thermoplastique est un polyamide aliphatique ou un polyester.

4. Renfort (R-1; R-2; R-3; R-4) selon la revendication 3, dans lequel le polymère thermoplastique est un polyamide aliphatique, de préférence un polyamide 6 ou un polyamide 11.

5. Renfort (R-1; R-2; R-3; R-4) selon l'une quelconque des revendications 1 à 4, dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

6. Renfort (R-1; R-2; R-3; R-4) selon l'une quelconque des revendications 1 à 5, dans lequel l'élastomère diénique est un caoutchouc naturel ou un polyisoprène de synthèse.

7. Renfort (R-1; R-2; R-3; R-4) selon l'une quelconque des revendications 1 à 5, dans lequel l'élastomère diénique est un polybutadiène ou un copolymère de butadiène-styrène, de préférence un copolymère de butadiène-styrène.

8. Renfort (R-1; R-2; R-3; R-4) selon l'une quelconque des revendications 1 à 7, dans lequel l'épaisseur minimale (Eₘ) de la couche (11; 21; 31; 42) est comprise entre 1 µm et 2 mm.

9. Renfort (R-1; R-2; R-3; R-4) selon l'une quelconque des revendications 1 à 8, dans lequel le fil de renforcement (10; 20; 30; 40) est un fil métallique.

10. Renfort (R-1; R-2; R-3; R-4) selon la revendication 9, dans lequel le fil métallique (10; 20; 30; 40) est un fil en acier au carbone.

11. Article en caoutchouc ou produit semi-fini en caoutchouc (6, 7) comportant un renfort (R-1; R-2; R-3; R-4) selon l'une quelconque des revendications 1 à 10.

12. Pneumatique (1) comportant un renfort selon l'une quelconque des revendications 1 à 10.

13. Procédé de fabrication d'un renfort composite (R-1; R-2; R-3; R-4) selon l'une quelconque des revendications 1 à 10, dans lequel on recouvre individuellement le fil ou chaque fil (10; 20; 30; 40) de renforcement, ou collectivement plusieurs fils (10; 20; 30; 40) de renforcement, par une couche (11; 21; 31; 42) de la composition polymère comportant au moins le polymère thermoplastique dont la température de transition vitreuse est positive, et l'élastomère diénique époxydé.

14. Procédé selon la revendication 13, dans lequel on soumet ensuite le renfort composite (R-1; R-2; R-3; R-4) à un traitement thermo-oxydant.

## Patentansprüche

1. Verbundverstärkung (R-1; R-2; R-3; R-4), umfassend:
- einen oder mehrere Verstärkungsfäden (10; 20; 30; 40);
- eine Schicht (11; 21; 31; 42) aus einer Polymerzusammensetzung, die den Faden, jeden Faden einzeln bzw. mehrere Fäden zusammen, bedeckt, wobei diese Zusammensetzung mindestens ein thermoplastisches Polymer, dessen Glasübergangstemperatur positiv ist, und ein epoxidiertes Dienelastomer umfasst.

2. Verstärkung (R-1; R-2; R-3; R-4) nach Anspruch 1, wobei die Glasübergangstemperatur des thermoplastischen Polymers größer als +20°C ist.

3. Verstärkung (R-1; R-2; R-3; R-4) nach Anspruch 1 oder 2, wobei es sich bei dem thermoplastischen Polymer um ein aliphatisches Polyamid oder einen Polyester handelt.

4. Verstärkung (R-1; R-2; R-3; R-4) nach Anspruch 3, wobei es sich bei dem thermoplastischen Polymer um ein aliphatisches Polyamid handelt, vorzugsweise ein Polyamid 6 oder ein Polyamid 11.

5. Verstärkung (R-1; R-2; R-3; R-4) nach einem der Ansprüche 1 bis 4, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

6. Verstärkung (R-1; R-2; R-3; R-4) nach einem der Ansprüche 1 bis 5, wobei es sich bei dem Dienelastomer um einen Naturkautschuk oder ein synthetisches Polyisopren handelt.

7. Verstärkung (R-1; R-2; R-3; R-4) nach einem der Ansprüche 1 bis 5, wobei es sich bei dem Dienelastomer um ein Polybutadien oder ein Butadien-Styrol-Copolymer, vorzugsweise ein Butadien-Styrol-Copolymer, handelt.

8. Verstärkung (R-1; R-2; R-3; R-4) nach einem der Ansprüche 1 bis 7, wobei die Minimaldicke (Eₘ) der Schicht (11; 21; 31; 42) zwischen 1 µm und 2 mm liegt.

9. Verstärkung (R-1; R-2; R-3; R-4) nach einem der Ansprüche 1 bis 8, wobei es sich bei dem Verstärkungsfaden (10; 20; 30; 40) um einen Metallfaden handelt.

10. Verstärkung (R-1; R-2; R-3; R-4) nach Anspruch 9, wobei es sich bei dem Metallfaden (10; 20; 30; 40) um einen Faden aus unlegiertem Stahl handelt.

11. Artikel aus Kautschuk oder Halbzeug aus Kautschuk (6, 7), umfassend eine Verstärkung (R-1; R-2; R-3; R-4) nach einem der Ansprüche 1 bis 10.

12. Reifen (1), umfassend eine Verstärkung nach einem der Ansprüche 1 bis 10.

13. Verfahren zur Herstellung einer Verbundverstärkung (R-1; R-2; R-3; R-4) nach einem der Ansprüche 1 bis 10, wobei man den Verstärkungsfaden bzw. jeden Verstärkungsfaden (10; 20; 30; 40) einzeln oder mehrere Verstärkungsfäden (10; 20; 30; 40) zusammen mit einer Schicht (11; 21; 31; 42) aus der Polymerzusammensetzung, die mindestens das thermoplastische Polymer, dessen Glasübergangstemperatur positiv ist, und das epoxidierte Dienelastomer umfasst, bedeckt.

14. Verfahren nach Anspruch 13, bei dem man die Verbundverstärkung (R-1; R-2; R-3; R-4) anschließend einer thermooxidativen Behandlung unterwirft.

## Claims

1. Composite reinforce (R-1; R-2; R-3; R-4) comprising:
- one or more reinforcing thread(s) (10; 20; 30; 40);
- a layer (11; 21; 31; 42) of a polymer composition which covers the said thread, individually each thread or collectively several threads, this composition comprising at least one thermoplastic polymer, the glass transition temperature of which is positive, and an epoxidized diene elastomer.

2. Reinforcer (R-1; R-2; R-3; R-4) according to Claim 1, in which the glass transition temperature of the thermoplastic polymer is greater than +20°C.

3. Reinforcer (R-1; R-2; R-3; R-4) according to Claim 1 or Claim 2, in which the thermoplastic polymer is a polyester or an aliphatic polyamide.

4. Reinforcer (R-1; R-2; R-3; R-4) according to Claim 3, in which the thermoplastic polymer is an aliphatic polyamide, preferably a polyamide 6 or a polyamide 11.

5. Reinforcer (R-1; R-2; R-3; R-4) according to any one of Claims 1 to 4, in which the diene elastomer is selected from the group consisting of natural rubber, synthetic polyisoprenes, polybutadienes, butadiene copolymers, isoprene copolymers and the mixtures of these elastomers.

6. Reinforcer (R-1; R-2; R-3; R-4) according to any one of Claims 1 to 5, in which the diene elastomer is a natural rubber or a synthetic polyisoprene.

7. Reinforcer (R-1; R-2; R-3; R-4) according to any one of Claims 1 to 5, in which the diene elastomer is a polybutadiene or a butadiene/styrene copolymer, preferably a butadiene/styrene copolymer.

8. Reinforcer (R-1; R-2; R-3; R-4) according to any one of Claims 1 to 7, in which the minimum thickness of the layer is between 1 µm and 2 mm.

9. Reinforcer (R-1; R-2; R-3; R-4) according to any one of Claims 1 to 8, in which the reinforcing thread is a metal thread.

10. Reinforcer (R-1; R-2; R-3; R-4) according to Claim 9, in which the metal thread is a thread made of carbon steel.

11. Article made of rubber or semi-finished product (6, 7) made of rubber comprising a reinforcer (R-1; R-2; R-3; R-4) according to any one of Claims 1 to 10.

12. Tyre (1) comprising a reinforcer according to any one of Claims 1 to 10.

13. Process for the manufacture of a composite reinforcer (R-1; R-2; R-3; R-4) according to any one of Claims 1 to 10, in which the reinforcing thread or each reinforcing thread (10; 20; 30; 40) is individually covered, or several reinforcing threads (10; 20; 30; 40) are collectively covered, by a layer (11; 21; 31; 42) of the polymer composition comprising at least the thermoplastic polymer having a positive glass transition temperature and the epoxidized diene elastomer.

14. Process according to Claim 13, in which the composite reinforcer (R-1; R-2; R-3; R-4) is subsequently subjected to a thermo-oxidative treatment.
